# EUROPÄISCHE PATENTSCHRIFT

(11) **EP 0 648 796 B1**
(45) Veröffentlichungstag und Bekanntmachung des Hinweises auf die Patenterteilung: **26.08.1998**
(21) Anmeldenummer: 94115932.9
(22) Anmeldetag: 10.10.1994
(51) Int. Cl.: C08G 73/10, C09D 179/08

(54) **Lösungen von polyimidbildenden Substanzen und deren Verwendung**
Solutions of polyimide-forming substances and their use
Solutions de précurseurs de polyimides et leur utilisation

(30) Priorität: 18.10.1993 DE 4335323
(43) Veröffentlichungstag der Anmeldung: 19.04.1995
(73) Patentinhaber: SCHENECTADY INTERNATIONAL INC., Schenectady New York 12309 (US)
(72) Erfinder: Blum, Rainer, D-67069 Ludwigshafen (DE); Schwarz, Manfred, D-22869 Schenefeld (DE); Hoffmann, Gerhard, Dr., D-67166 Otterstadt (DE)
(74) Vertreter: Isenbruck, Günter, Dr.

(56) Entgegenhaltungen:
- EP-A- 0 182 254
- EP-A- 0 248 932
- EP-A- 0 409 002
- DE-A- 4 107 664
- DE-A- 4 135 056
- JP-A-61 127 731
- US-A- 3 950 308
- US-A- 4 499 252
- US-A- 5 004 627
- PATENT ABSTRACTS OF JAPAN vol. 13, no. 339 (C-624) (3687) 31. Juli 1989 & JP-A-01 117 878 (UBE INDUSTRIES LIMITED)

## Beschreibung

Die vorliegende Erfindung betrifft Lösungen von polyimidbildenden Substanzen, enthaltend
A) Polyamine, und
B) Amide oder Ester oder Gemische aus Amiden und Estern von Tetracarbonsäuren, worin 10 bis 100 mol-% der Amid- oder Estergruppen mit Carboxylgruppen oder Sulfonylgruppen und/oder 0,5 bis 30 mol-% der Amid- beziehungsweise Estergruppen mit Silyl- oder Siloxylgruppen, bezogen auf die Gesamtmenge an eingesetzten amin- bzw. hydroxyfunktionellen Verbindungen, substituiert sind.

Weiterhin betrifft die Erfindung die Verwendung solcher Lösungen als Beschichtungsmittel sowie mit einem Polyimid beschichtete Gegenstände.

Ein wichtiges Einsatzgebiet der sogenannten Polyimid-Lacke, welche Lösungen polyimidbildender Substanzen darstellen, ist die Mikroelektronik, wo Polyimid-Beschichtungen als Isolationsschichten in den Strukturen der Mikrochips oder als Pufferschichten zwischen dem fertigen Chip und dem Chipgehäuse eingesetzt werden.

Eine wichtige Forderung an die Polyimid-Schichten ist eine gute Haftung an das Basismaterial der Chips, also an Scheiben aus Silizium oder modifiziertem Silizium. Dieses Problem wurde bisher gelöst, in dem die anorganischen Substrate mit Haftvermittlern wie beispielsweise Aminoalkoxysilanen vorbehandelt wurden oder in dem den Lacklösungen haftvermittelnde Substanzen zugesetzt werden.

So wurden in der DE-A 41 07 664 Lösungen von Polykondensaten mit Stickstoff-heterocyclischen Struktureinheiten beschrieben, welchen als Haftvermittler Azidosilane zugesetzt werden.

DE-A- 41 35 056 beschreibt lösungen von polyimidbildenden Ausgangsstoffen. enthaltend Diamine und Tetracarbonsäurediester, wobei sich mindestens 2 mol.-% der Estergruppen in den Tetracarbonsäurediestern von Alkoholen der allgemeinen Formel

HO-Z-O-X (I)

oder

HO-Z-X (II)

ableiten, worin Z für einen geradkettigen oder verzweigten aliphatischen Rest aus 1 bis 15 Kohlenstoffatomen, welcher durch 1 bis 4 Ethergruppen -O- unterbrochen sein kann und X für einen aromatischen Rest aus 5 bis 20 Kohlenstoffatomen, welcher auch Stickstoff, Sauerstoff oder Schwefel als Heteroatome im aromatischen Ringsystem enthalten kann, steht, wobei Benzylalkohol als Verbindung der Formel II im Falle der Mitverwendung von Diaminen mit einer Basizitätskonstanten kleiner oder gleich 10⁻¹¹ ausgeschlossen ist.

Eine weitere Forderung an solche Polyimid-Beschichtungen ist eine möglichst geringe Wasseraufnahme, um die Funktion der Mikrochips auch unter feuchten Bedingungen zu gewährleisten. Da die Imidgruppe bekanntermaßen hydrophilen Charakter hat, wurde versucht dies durch den Einsatz möglichst hydrophober Polyimide auszugleichen, beispielsweise durch Einsatz von Ausgangsstoffen mit möglichst hohem Molekulargewicht um die Imidgruppendichte im Polymer zu verringern.

Weiterhin ist es wünschenswert strukturierbare Polyimidlacke zu erhalten. Dazu werden die Polyimidschichten zunächst vorgetrocknet und dann mit einem Photolack überzogen. Danach wird unter einer Maske bildmäßig belichtet und dann in der Regel mit verdünnten wäßrigen Alkalilösungen entwickelt. Dadurch kann der Fotolack an den belichteten Stellen abgelöst werden. Im nächsten Schnitt wird dann an den entwickelten Stellen auch der Polyimidlack entfernt und die vorgetrocknete Polyimid-Schicht auf diese Weise strukturiert. Zur Strukturierung unter Photolacken mit wäßrig-alkalischen Entwicklern müssen die Polyimid-Vorstufen soweit vorgetrocknet werden, daß sie durch den Photolack bzw. die darin enthaltenen Lösungsmittel nicht mehr angegriffen werden.

Dabei ergeben sich aber gerade beim Einsatz solcher Polyimid-Vorstufen, die zu Polyimiden mit geringer Wasseraufnahme ausgehärtet werden können, Probleme bei der Entwicklung, weil diese nach ausreichender Vortrocknung durch wäßrig-alkalische Entwickler nicht mehr lösbar sind.

Aufgabe der vorliegenden Erfindung war es, verbesserte PolyimidLacke zu finden.

Demgemäß wurden die eingangs definierten Lösungen polyimidbildender Substanzen gefunden.

Die Einzelkomponenten der Lösungen werden im folgenden beschrieben.

Als Polyamin-Komponenten A) kommen bevorzugt aromatische und/oder teilaromatische Polyamine in Betracht, wobei Diamine, ganz besonders aromatische Diamine bevorzugt sind.
p-Phenylendiamin,
   m-Phenylendiamin,
   (4,4'-Diaminodiphenyl)-oxid,
   (3,3'-Diaminodiphenyl)-oxid,
   (3,4'-Diaminodiphenyl)-oxid,
(4,4'-Diaminodiphenyl)-sulfid,
   (3,3'-Diaminodiphenyl)-sulfid,
   (3,4'-Diaminodiphenyl)-sulfid,
(4,4'-Diaminodiphenyl)-sulfon,
   (3,3'-Diaminodiphenyl)-sulfon,
   (3,4'-Diaminodiphenyl)-sulfon,
(4,4'-Diaminodiphenyl)-methan,
   (3,3'-Diaminodiphenyl)-methan,
   (3,4'-Diaminodiphenyl)-methan,
(4,4'-Diaminodiphenyl)-propan,
   (3,3'-Diaminodiphenyl)-propan,
   (3,4'-Diaminodiphenyl)-propan,
(4,4'-Diaminodiphenyl)-ethan,
   (3,3'-Diaminodiphenyl)-ethan,
   (3,4'-Diaminodiphenyl)-ethan,
4,4'-Bis-(4,4'-aminophenoxy)-biphenyl,
   4,4'-Bis-(4,3'-aminophenoxy)-biphenyl,
2,2-Bis[4-(4,4-aminophenoxy)phenyl]-propan,
   2,2-Bis[4-(4,4-aminophenoxy)phenyl]-perfluorpropan,
   2,2-Bis[4-(3,4-aminophenoxy)phenyl]-propan,
   2,2-Bis[4-(3,3'-aminophenoxy)phenyl]-propan,
2,2-Bis[4-(4,4'-aminophenoxy)phenyl]-sulfon,
   2,2-Bis[4-(3,4-aminophenoxy)phenyl]-sulfon,
   2,2-Bis[4-(3,3'-aminophenoxy)phenyl]-sulfon,
4,4'-Dimethyl-3,3'-diaminodiphenylsulfon,
2,2-Bis[4-(4,4'-aminophenoxy)phenyl]-sulfid,
   2,2-Bis[4-(3,4-aminophenoxy)phenyl]-sulfid,
   2,2-Bis[4-(3,3'-aminophenoxy)phenyl]-sulfid,
2,2-Bis[4-(4,4'-aminophenoxy)phenyl]-methan,
   2,2-Bis[4-(3,4-aminophenoxy)phenyl]-methan,
   2,2-Bis[4-(3,3'-aminophenoxy)phenyl]-methan,
1,4-Bis-(4,4'-aminophenoxy)-phenylen,
   1,4-Bis-(3,4'-aminophenoxy)-phenylen,
   1,4-Bis-(3,3'-aminophenoxy)-phenylen,
4,4'-Diaminodiphenyl(Benzidin),
   3,4'-Diaminodiphenyl,3,3'-Diaminodiphenyl,
   3,3'-Dimethoxy-4,4'-diaminodiphenyl,
   3,3'-Dimethoxy-3,4'-diaminodiphenyl,
3,3'-Dimethyl-4,4'-diaminodiphenyl,
   3,3'-Dimethyl-3,4'-diaminodiphenyl,
1,8-Diaminonaphthalin,
   1,5-Diaminonaphthalin,
p-Terphenyl-4,4''-diamin, p-Terphenyl-3,3''-diamin,
   5-tert.-Butyl-2,4-toluylendiamin,
   3-tert.-Butyl-2,6-toluylendiamin,
3,5-Diethyl-2,4-toluylendiamin,
   3,5-Diethyl-2,6-toluylendiamin,
Alkyliso-propyl-toluylendiamine wie Diisoproyltoluylendiamin,
α,ω-Diamino-(polyphenylensulfid)e,
m-Xylylendiamin,
   p-Xylylendiamin,
Bis-4,4'-[(2,6-diisopropyl)aminophenyl]methan,
   Bis-4,4'-[(2-methyl-6-isopropyl)aminophenyl]methan,
   Bis-4,4'-[(2,6-dimethyl)aminophenyl]methan,
Bis-4,4'-[(2,6-diisopropyl)aminophenyl]ether,
   Bis-4,4'-[(2-methyl-6-isopropyl)aminophenyl]ether oder
   Bis-4,4'-[(2,6-dimethyl)aminophenyl]ether.

Weiterhin kommen als Polyamine Tetraamine wie 3,3',4,4'-Tetraaminobiphenyl, 3,3',4,4'-Tetraaminodiphenylmethan, 3,3',4,4'-Tetraaminodiphenylether, 3,3',4,4'-Tetraaminodlphenylsulfon oder 3,3',4,4'-Tetraaminodiphenylsulfid in Betracht. Solche Tetraamine ergeben als Endstruktur Polyarylenbenzindazole.

Eine weitere wichtige Gruppe von Diaminen sind aromatische Mehrkernverbindungen die über Benzanilidgruppen verbunden sind, wie z. B. 3,3'-Diaminobenzanilid, 3,4'-Diaminobenzanilid, 4,3'-Diaminobenzanilid, 4,4'-Diaminobenzanilid oder 4,3'-Diaminobenzanilid und die N-Alkylsubstitutionsprodukte dieser Anilide, sowie die α,ω-Polaniliddiamine nach EP-A 271736.

Ziel sind in der Regel Polyimide mit bestmöglichen Eigenschaftskombinationen. Diese werden in der Regel durch eine vollaromatische Struktur erhalten. Die erfindungsgemäßen Polyimide werden deshalb bevorzugt mit rein aromatischen Diaminen hergestellt.

Obwohl nicht rein aromatische Diamine die Thermostabilität der Endprodukte in der Regel verschlechtern, können zur Einstellung spezieller Eigenschaften wie z. B. Oberflächenglätte, Elastizität u. a. jedoch auch cycloaliphatische, heterocyklische und aliphatische Aminverbindungen mit einer Aminfunktionalität größer als 1, bevorzugt gleich 2 oder größer verwendet oder mitverwendet werden.

Das sind zum Beispiel: Diamino-(dimethyl-)-dicyclohexyl-methan, Diamino-(dimethyl-diisopropyl-)-dicyclohexyl-methan, Diamino-(tetraisopropyl-)-dicyclohexyl-methan, Diamino-(diisopropyl-)-dicyclohexyl-methan, Diaminoalkylene oder Diaminopolyoxyalkylene.

Wichtig sind auch aromatische Diamine die am Kern weiter mit reaktionsfähigen Gruppen substituiert sind. Solche reaktionsfähigen Substituenten sind z. B. Carboxyl-, Hydroxyl- und Amin- und Amidgruppen. Mit solchen substituierten Aminen werden dann auch Polyheterocyclen mit nichtimidischer Struktur gebildet. Im Falle der o-Carbonsäureamidamine, wie z. B. des Anthranilsäureamids, ergeben sich als Endstruktur Polyisoindolochinazolindione. Mit Dihydroxydiaminen Polybenzoxazole, mit Tetraaminen Polyarylenbenzimidazole. Die vorliegende Erfindung schließt auch solche Polymere ein.

Weiter ist es auch erfindungsgemäß, Salze und Teilsalze der Amine zu verwenden oder mitzuverwenden, z. B. die Carbonate, Acetate, Trifluoracetate, Trichloracetate, Formiate, Oxalate, Maleinate, Methansulfonate, Benzolsulfonate, Chloride u. a.. Es hat sich gezeigt, daß die Verwendung solcher Salze die starke Verfärbung besonders der aromatischen Diamine unterdrückt und bei einigen Kombinationen glattere Filme ergibt.

Die aufgeführten Ausgangsstoffe sind bekannt oder können nach an sich bekannten Verfahren hergestellt werden.

Die Liste der Ausgangsstoffe ist nur beispielhaft, die Erfindung ist nicht auf die Verwendung dieser Stoffe eingeschränkt.

Als Komponenten B) werden erfindungsgemäß Ester oder Amide oder Gemische von Estern und Amiden von Tetracarbonsäuren eingesetzt, die erhältlich sind durch Umsetzung von Tetracarbonsäuren, oder, bevorzugt, von Tetracarbonsäuredianhydriden mit hydroxy- und/oder Amin-funktionellen Verbindungen, welche mindestens einen Substituenten aus der Gruppe der Carboxyl-, Sulfonyl-, Silyl- oder Siloxyl-Gruppen tragen.

Zur Einführung der Carboxyl- oder Sulfonylgruppen werden bevorzugt Tetracarbonsäuredianhydride mit monohydroxy-funktionellen Verbindungen und/oder primären Monoaminen und/oder sekundären Monoaminen umgesetzt.

Als monohydroxyfunktionelle Verbindungen kommen vor allem aliphatische und aromatische Hydroxycarbonsäuren oder -sulfonsäuren in Betracht, beispielsweise Glykolsäure, Milchsäure, weitere Hydroxyfettsäuren wie Buttersäure oder Valeriansäure, aromatische Hydroxycarbonsäuren wie Salicylsäure, Hydroxyalkansulfonsäuren wie 1-Hydroxyethylsulfonsäure, 1-Hydroxypropylsulfonsäure, sowie aromatische Sulfonsäuren wie die Hydroxybenzolsulfonsäuren oder die Toluolsulfonsäuren.

Als Monoaminkomponenten kommen vor allem Aminocarbonsäuren oder Aminosulfonsäuren in Betracht. Geeignete Aminocarbonsäuren sind beispielsweise gesättigte Aminocarbonsäuren, wie Aminoessigsäure, α-Amino-propancarbonsäure, β-Aminopropancarbonsäure oder höhere Homologe der Aminofettsäuren, aromatische Aminocarbonsäuren wie o-Aminobenzoesäure. Geeignete Aminosulfonsäuren sind Aminoethansulfonsäure, Aminopropensulfonsäure oder aromatische Sulfonsäuren wie o-Aminobenzolsulfonsäure.

Die Einführung der Silyl- oder Siloxylgruppen erfolgt ebenfalls über hydroxy- oder aminfunktionelle Verbindungen, wie beispielsweise
Aminoalkylalkoxysilane wie
   Aminoethyltris(trimethylsiloxy)silan,
   4-Aminobutyltrialkoxysilane,
   4-Aminobutylmethyldialkoxysilane,
   4-Aminobutyldimethylalkoxysilane,
3-Aminopropyltriethoxysilan,
   3-Aminopropyldiethoxymethylsilan,
   3-Aminopropylethoxydimethylsilan,
Aminoethyltriethoxysilan,
   Aminoethyldiethoxymethylsilan,
   Aminoethylethoxydimethylsilan,
Aminopropyltrimethoxysilan,
   Aminopropyldimethoxymethylsilan,
   Aminopropylmethoxydimethylsilan,
Aminoethyltrimethoxysilan,
   Aminoethyldimethoxymethylsilan,
   Aminoethylmethoxydimethylsilan,
(Aminoethyl-aminomethyl)phenylethyltrimethoxysilan,
   N-(2-Aminoethyl)-3-aminopropylmethyldimethoxysilan,
   N-(2-Aminoethyl)-3-aminopropyltrimethoxysilan,
   3-(3-Aminophenoxy)propyltrimethoxysilan,
   3-(4-Aminophenoxy)propyltrimethoxysilan,
   Aminophenyltriethoxysilane in verschiedenen Isomeren,
   Aminophenyltrimethoxysilane in verschiedenen Isomeren,
3-Aminopropyltris(trimethylsiloxy)silan,
   1,3-Bis(4-aminobutyl)tetramethyldisiloxan,
   Bis(p-aminophenoxy)dimethylsilan,
   1,3-Bis(3-aminopropyl)-1,1,3,3-tetramethyldisiloxan,
(Cyclohexylaminomethyl)methyldiethoxysilan,
   (Cyclohexylaminomethyl)triethoxysilan,
   (Cyclohexylaminomethyl)dimethylethoxysilan,
   (N-Ethyl-3-aminopropyl)trimethoxysilan,
1,3-Bis(4-hydroxybutyl)tetramethyldisiloxan,
   1,4-Bis(hydroxydimethylsilyl)tetramethyldisiloxan,
   Bis(2-hydroxyethyl)-3-aminopropyltriethoxysilan,
   1,3-Bis(3-hyroxypropyl)tetramethyldisiloxan,
t-Butylaminotriethylsilan,
   t-Butylaminotrimethylsilan,

(Cyclohexylaminomethyl)methyldiethoxysilan oder aminoterminierte oligomere Siloxane mit Molgewicht bis 2000 oder hydroxylterminierte oligomere Siloxane mit Molgewicht bis 2000.

Bevorzugt verwendete Silyl- oder Siloxylverbindungen sind Aminopropyltriethoxysilan oder t-Butylaminoethylsilan.

Man kann die erfindungsgemäßen Tetracarbonsäure-ester und/oder -amide sowohl nur mit sauren Gruppen wie der Carboxyl- oder der Sulfonylgruppe oder nur mit Silyl- oder Siloxyl-Gruppen modifizieren als auch bevorzugt mit sauren und Silicium-haltigen Gruppen. Sofern nicht alle Amid- bzw. Ester-gruppierungen in dieser Art substituiert sind, werden zusätzlich als hydroxy- und/oder aminfunktionelle Verbindungen Alkohole und/oder primäre und/oder sekundäre Amine, die keine derartigen Gruppen tragen, umgesetzt. Geeignete Alkohole sind vor allem C₁-C₈-Alkanole wie Methanol, Ethanol, Propanol, Isopropanol, n-Butanol, Isobutanol, n-Pentanol und seine Isomere, n-Hexanol und seine Isomere oder 2-Ethyl-Hexanole oder weiterhin Cycloalkylalkohole wie Cyclohexanol, weiterhin aromatische Alkohole wie Phenol, Kresol, Cumol oder Alkoxyarylalkohole wie 3-Phenoxypropanol oder 2-Phenoxyethanol, oder Polyalkoxyglykolether oder Polyalkoxyglykolester oder Gemische davon.

Der Anteil an Amid- bzw. Ester-Gruppierungen, die mit den genannten funktionellen Gruppen substituiert sind, richtet sich nach den anwendungstechnischen Anforderungen.

Zur Erzielung einer guten Naßentwickelbarkeit durch Substitution mit sauren Gruppen wie Carboxyl- oder Sulfonylgruppen empfiehlt es sich 10 bis 100 mol-%, vorzugsweise 20 bis 50 mol-%, bezogen auf die Gesamtmenge an eingesetzten amin- bzw. hydroxyfunktionellen Verbindungen einzusetzen.

Zur Erzielung einer guten Haftung empfiehlt es sich, 0,5 - 30 mol-%, bevorzugt 5 - 25 mol-%, bezogen auf die Gesamtmenge an eingesetzten OH- und aminfunktionelen Verbindungen, an silyl- oder siloxyl-substituierten amino- oder hydroxyfunktionellen Verbindungen einzusetzen.

Geeignete Amine sind vor allem primäre und/oder sekundäre gesättigte C₁-C₈-Monoamine wie Ethylamin, 1-Aminopropan, 2-Aminopropan, Dimethylamin, Ethylmethylamin, Diethylamin oder auch aromatische Monoamine wie Anilin oder Toluidin.

Als Tetracarbonsäurekomponenten werden vor allem die Dianhydride der im folgenden genannten Tetracarbonsäuren eingesetzt.

Bevorzugt sind aromatische oder teilaromatische Tetracarbonsäuren wie Pyromellithsäure,
Benzol-1,2,3,4-tetracarbonsäure,
   3,3',4,4'-Biphenyltetracarbonsäure,
   2,2',4,4'-Biphenyltetracarbonsäure,
   2,3,3',4'-Biphenyltetracarbonsäure,
   2,2',3,3'-Benzophenontetracarbonsäure,
   2,3,3',4'-Benzophenontetracarbonsäure,
2,3,6,7-Naphthalintetracarbonsäure,
   1,2,5,6-Naphthalintetracarbonsäure,
   1,2,4,5-Naphthalintetracarbonsäure,
   1,4,5,8-Naphthalintetracarbonsäure,
   1,2,6,7-Naphthalintetracarbonsäure,
2,6-Dichlornaphthalin-1,4,5,8-tetracarbonsäure,
   2,7-Dichlornaphthalin-1,4,5,8-tetracarbonsäure,
2,3,6,7-Tetrachlornaphthalin-1,4,5,8-tetracarbonsäure,
   1,4,5,8-Tetrachlornaphthalin-2,3,6,7-tetracarbonsäure,
   4,8-Dimethyl-1,2,3,5,6,7-hexahydronaphtalin-1,2,5,6-tetracarbonsäure,
   4,8-Dimethyl-1,2,3,5,6,7-hexahydronaphthalin-2,3,6,7-tetracarbonsäure,
   4,4'-Oxydiphthalsäure,
   3,3'-Oxydiphthalsäure,
   4,4'-Sulfonyldiphthalsäure,
   4,4'-Thiodiphthalsäure,
   3,3'-Thiodiphthalsäure,
   4,4'-Acetylidendiphthalsäure,
Bis(2,3-dicarboxyphenyl)methan,
   Bis(3,4-dicarboxyphenyl)methan,
   1,1-Bis(2,3-dicarboxyphenyl)ethan,
   1,1-Bis(3,4-dicarboxyphenyl)ethan,
2,2-Bis(2,3-dicarboxyphenyl)propan,
   2,2-Bis(3,4-dicarboxyphenyl)propan,
Phenanthren-1,2,7,8-tetracarbonsäure,
   Phenanthren-1,2,6,7-tetracarbonsäure,
   Phenanthren-1,2,9,10-tetracarbonsäure,
2,3,9,10-Perylentetracarbonsäure,
   3,4,9,10-Perylentetracarbaonsäure,
   2,3,8,9-Perylentetracarbonsäure,
   4,5,10,11-Perylentetracarbonsäure,
3,3",4,4"-p-Terphenyltetracarbonsäure,
   2,2",3,3"-p-Terphenyltetracarbonsäure oder
   2,3,3",4"-p-Terphenyltetracarbonsäure.

Weiterhin geeignet sind Butan-1,2,3,4-tetracarbonsäure, Cyclobutantetracarbonsäure, Cyclopentan-1,2,3,4-tetracarbonsäure, Pyrrolidin-2,3,4,5-tetracarbonsäure, Thiophen-2,3,4,5-tetracarbonsäure, Pyrazin-2,3,5,6-tetracarbonsäure, Tetrahydrofurantetracarbonsäure, 9-Brom-10-merkaptoanthracentetracarbonsäure 9,10-Dimerkaptoanthracendicarbonsäure, 2,6-Endovinylencyclohexan-1,2,4,5-tetracarbonsäure oder Hexafluoroisopropyliden-2,2-bis(phthalsäureanhydrid).

Weitere in Betracht kommende Isomere und Substitutionsprodukte der genannten Polycarbonsäuren sind Halogen-, insbesondere Fluor- oder Perfluor-, und/oder Alkylsubstitutionsprodukte und Polycarbonsäuren mit Silizium.

Weiter kommen auch die Dimerisierungs- und Oligomerisierungsprodukte von Trimellithsäureanhydrid mit Alkoholen, Aminen und Isocyanaten mit einer Funktionalität >2 und speziell die 4,4-Veresterungs-, 4,4-Veretherungs- und 4,4-Amidisierungsdimere der Trimellithsäure in Betracht. Es ist auch erfindungsgemäß, die Salze oder Teilsalze der Tetracarbonsäureverbindungen zu verwenden oder mitzuverwenden, sofern diese noch freie Carboxylgruppen aufweisen, z. B. Ammoniumsalze, Salze mit leichtflüchtigen Aminen wie Mono-, Di-, Trimethylamin, Mono-, Di-, Triethylamin und andere Amine. Weiter können auch die Phosphonium und Sulfoniumsalze saurer Tetracarbonsäureverbindungen verwendet oder mitverwendet werden. Die Verwendung solcher Salze führt in der Regel zu erwünschten, niedrigeren Viskositäten bei höherem Feststoffgehalt.

Die aufgeführten Tetracarbonsäuren sind bekannt oder können nach bekannten Verfahren hergestellt werden.

Geeignet sind auch Gemische von Tetracarbonsäuredianhydriden.

Die Herstellung der Tetracarbonsäureester und -amide kann nach an sich bekannten Methoden erfolgen. Durch Umsetzung mit der hydroxy- oder amin-funktionellen Verbindungen werden die Säureanhydridringe gespalten, wobei aus einem Säureanhydridring zunächst eine Ester- oder Amid-gruppe und eine Carbonsäure-Gruppe hervorgeht. Ob eine weitergehende Veresterung/Amidierung stattfindet, hängt bekanntermaßen von der Reaktionstemperatur ab; bei 50 bis 150°C werde normalerweise nur die Diester bzw. Diamide gebildet, bei höheren Temperaturen bis 200°C können auch Tri- oder Tetraderivate entstehen. Monoderivate entstehen nur in untergeordneten Mengen. Die Umesterung/Amidierung kann in Gegenwart von Katalysatoren wie Dimethylaminopyridin oder p-Toluolsulfonsäuren durchgeführt werden.

Bevorzugt werden Diester oder Diamide oder deren Gemische hergestellt. Die Diester oder Diamide können gleichzeitig oder getrennt hergestellt werden. Die Mengen an eingesetzten Hydroxy- oder Aminkomponente wird vorzugsweise so bemessen, daß pro mol Tetracarbonsäure(-dianhydrid) 0,5 bis 3 mol, vorzugsweise 1,5 bis 2,5 mol, der Hydroxy- und Amin-komponente verwendet werden. Besonders bevorzugt werden äquivalente Menge eingesetzt, also pro mol Tetracarbonsäure(-dianhydrid) 2 mol Alkohol oder Amin oder 2 mol Alkohol/Amin-Gemisch.

Erfindungsgemäß können Ester/Amid-Gemische verwendet werden, wobei der Mengenanteil an Amid 5 bis 40 mol-%, bevorzugt 5 bis 20 mol-% betragen kann.

Der Aufbau der erfindungsgemäßen Vorstufen erfolgt in der Regel in geeigneten organischen Lösemitteln, bevorzugt sind polare Stoffe wie:
Formamid,
   Acetamid,
   N-Methylformamid,
   N,N-Dimethylformamid,
   N,N-Diethylformamid,
   N-Methylpyrrolidon,
Dialkylacetamide wie
   N,N-Dimethylacetamid oder
   N,N-Diethyacetamid,
   Alkylalkylendiharnstoffe wie
   Dimethylethylendiharnstoff oder
   Dimethylpropylendiharnstoff,
Alkylenharnstoffe wie
   Ethylendiharnstoff oder
   Propylendiharnstoff,
   Butyrolacton,
   Caprolactam,
Pyyrolidon,
N-Alkylpyrrolidone wie
   N-Methylpyrrolidon (NMP),
   N-Aethylpyrrolidon,
N-Cyklohexylpyrrolidon oder
   N-Acetylpyrrolidon, weiterhin
   Dimethylsulfoxid,
   Dimethylsulfon, oder
   Hexamethylenphosphorsäureamid.

Diese polaren Stoffe können ganz oder teilweise durch weitere Lösemittel wie Alkohole, Ester, Ketone, Ether und cycloaliphatische Ketone, Alkohole, Ester, Amine, speziell tertiäre Amine wie Triethylamin, Wasser, Glykole, Glykolester, Glykolether und Kohlenwasserstoffe ersetzt werden. Die Lösemittelauswahl hängt von der Löslichkeit der anderen Stoffe, der gewünschten Konzentration und Viskosität ab und ist im Einzelfall eine Optimierungsaufgabe. Auch die Tetracarbonsäureverbindungen sind in einigen Fällen relativ niederviskose Flüssigkeiten, so daß es möglich ist ohne oder mit nur sehr wenig zusätzlichem Lösemittel zu arbeiten und so Polyimidlacke mit außergewöhnlich hohem Feststoffgehalt zu erzeugen.

Die erfindungsgemäßen Lösungen enthalten das Polyamin A) und die Tetracarbonsäurederivate B) vorzugsweise im Molverhältnis von 1,5 : 1 bis 1 : 1,5, besonders bevorzugt im Molverhältnis von 1 : 1.

Die erfindungsgemäßen Lösungen können auch freie Tetracarbonsäuren enthalten. Diese können getrennt zugegeben werden oder in der Lösung durch Zugabe von Wasser erzeugt werden.

Der Feststoffgehalt der Lösungen beträgt vorzugsweise 35 bis 60 Gew.-%. Die Viskositäten liegen vorzugsweise im Bereich von 500 bis 10.000 mPa-s. Für spezielle Anwendungen können jedoch durch entsprechende Verdünnung die gewünschten Parameter beliebig eingestellt werden.

Zur Herstellung der Lösungen können Tetracarbonsäurederivate, Polyamin und Lösungsmittel in beliebiger Reihenfolge zusammengegeben werden. Zum Beispiel ist es möglich zunächst die Tetracarbonsäurederivate herzustellen und zum erhaltenen Gemisch das Diamin und gegebenenfalls weiteres Lösungsmittel zu geben. Um alle Komponenten in Lösung zu bringen wird, falls erforderlich, bei Raumtemperatur oder auch erhöhter Temperatur, z. B. zwischen 30 und 120°C, insbesondere 40-80°C, gerührt.

Die erfindungsgemäßen Lösungen können übliche Zusatzstoffe, wie Katalysatoren für die Imidbildung, Farbstoffe, Pigmente, Füllstoffe, Verlaufsmittel und viskositätsregulierende Stoffe enthalten.

Sie eignen sich als Beschichtungsmittel zur Herstellung von Überzügen auf unterschiedlichsten Substraten, z. B. Metall, Glas oder Silicium. Die Härtung der Beschichtung erfolgt vorzugsweise bei Endtemperaturen zwischen 150° und 450°C, besonders bevorzugt zwischen 300 und 400°C. Es hat sich als besonders vorteilhaft erwiesen den Härtungsprozeß mehrstufig durch stufenweises Erhöhen der Temperatur bis zur Endtemperatur durchzuführen.

Die erfindungsgemäßen Lösungen finden Anwendung bei der Beschichtung von Si-Wafern zum Aufbau elektronischer Schaltungen, Keramik und Metall zum Aufbau zusammengestellter Schaltungen, besonders zur Herstellung von Multi-Chip-Modules, zur Beschichtung von Draht, zur Beschichtung von Lichtwellenleitern aus Glas oder Quarz, zum Lackieren von Metallfolien zur Herstellung von flexiblen Leiterplatten, zur Beschichtung, Tränkung und Verklebung von geordneten und ungeordneten, flächigen und geformten Faserstoffen, zum Vergießen von elektronischen und elektrischen Schaltungen und Wicklungen, zur Herstellung von Pulvern, Fasern, freier Filme oder Formteile.

Mit den erfindungsgemäßen Lösungen lassen sich Überzüge herstellen, welche bei geringer Wasseraufnahme sehr gut alkalisch-wäßrig entwickelbar sind.

Weiterhin weisen die erfindungsgemäßen Überzüge, welche mit siliziumorganischen Gruppen modifizierte Polyimide enthalten, eine so gute Haftung auf dem Substrat auf, daß auf den Einsatz von Haftvermittlern verzichtet werden kann.

Erfindungsgemäße Überzüge die mit sauren und siliziumorganischen Gruppen modifizierte Polyimide enthalten, weisen gute Naßentwikkelbarkeit bei gleichzeitig guter Haftung auf.

Ein weiterer Vorzug der erfindungsgemäßen Lösungen stellt die relativ niedrige Viskosität bei hohem Feststoffgehalt dar, wodurch beim Einbrennen der Überzüge Blasenbildung vermieden wird.

Die Erfindung wird durch die nachfolgenden Beispiele näher erläutert.

### Beispiele

| Abkürzungen: | |
|---|---|
| ODPA | Oxydiphthalsäuredianhydrid |
| BAPP | 2,2-Bis[(4-aminophenoxy)phenyl]propan |
| MPG | Ethylenglykolmonophenyether |
| NMP | N-Methylpyrrolidon |
| DMAP | Dimethylaminopyridin |
| APTES | Aminopropyltriethoxysilan |
| DADO | Diaminodiphenyl-oxid (Bis[4-aminophenyl]-oxid) |

Allgemeine Vorschrift zur Herstellung der Lösungen polyimidbildender Substanzen

In den folgenden Beispielen und Vergleichsbeispielen werden zunächst durch Umsetzung der Tetracarbonsäureanhydride mit den Hydroxy- und/oder Amin-funktionellen Verbindungen durch Rühren bei 120°C (30 min.) in Gegenwart von DMAP als Katalysator und der ersten Teilmenge des Lösungsmittels die Ester und/oder Amid der Tetracarbonsäuren hergestellt. Nach Abkühlen auf 60°C wurden die Diamine (Komponente A) sowie gegebenenfalls weiteres Lösungsmittel zugesetzt und gerührt bis eine Lösung entstanden war.

| Vergleichsbeispiel (VB): | | |
|---|---|---|
| 93.08 g | ODPA | (0.30 Mol) |
| 82.80 g | MPG | (0.60 Mol) |
| 100.00 g | NMP | |
| 00.50 g | DMAP | 30 Min. bei 120°C rühren, auf 60°C abkühlen, dazu eine Aufschlämmung von |
| 123.15 g | BAPP | (0.30 Mol) und |
| 100.00 g | NMP | 60 Min. bei 60°C weiterrühren, abkühlen. |

| Beispiel 1 (B1): | | |
|---|---|---|
| 93.08 g | ODPA | (0.30 Mol) |
| 69.00 g | MPG | (0.50 Mol) |
| 7.71 g | Aminoessigsäure | (0.10 Mol) |
| 100.00 g | NMP | |
| 00.50 g | DMAP | 30 Min. bei 120°C rühren, auf 60°C abkühlen, dazu eine Aufschlämmung von |
| 123.15 g | BAPP | (0.30 Mol) und |
| 100.00 g | NMP | 60 Min. bei 60°C weiterrühren, abkühlen. |

| Beispiel 2 (B2): | | |
|---|---|---|
| 93.08 g | ODPA | (0.30 Mol) |
| 55.20 g | MPG | (0.40 Mol) |
| 14.42 g | Aminoessigsäure | (0.20 Mol) |
| 100.00 g | NMP | |
| 00.50 g | DMAP | 30 Min. bei 120°C rühren, auf 60°C abkühlen, dazu eine Aufschlämmung von |
| 123.15 g | BAPP | (0.30 Mol) und |
| 100.00 g | NMP | 60 Min. bei 60°C weiterrühren, abkühlen. |

| Beispiel 3 (B3): | | |
|---|---|---|
| 93.08 g | ODPA | (0.30 Mol) |
| 41.40 g | MPG | (0.30 Mol) |
| 23.13 g | Aminoessigsäure | (0.30 Mol) |
| 100.00 g | NMP | |
| 00.50 g | DMAP | 30 Min. bei 120°C rühren, auf 60°C abkühlen, dazu eine Aufschlämmung von |
| 123.15 g | BAPP | (0.30 Mol) und |
| 100.00 g | NMP | 60 Min. bei 60°C weiterrühren, abkühlen. |

| Beispiel 4 (B4): | | |
|---|---|---|
| 93.08 g | ODPA | (0.30 Mol) |
| 55.20 g | MPG | (0.40 Mol) |
| 15.21 g | Glykolsäure | (0.20 Mol) |
| 100.00 g | NMP | |
| 00.50 g | DMAP | 30 Min. bei 120°C rühren, auf 60°C abkühlen, dazu eine Aufschlämmung von |
| 123.15 g | BAPP | (0.30 Mol) und |
| 100.00 g | NMP | 60 Min. bei 60°C weiterrühren, abkühlen. |

| Beispiel 5 (B5): | | |
|---|---|---|
| 93.08 g | ODPA | (0.30 Mol) |
| 55.20 g | MPG | (0.40 Mol) |
| 20.47 g | Milchsäure (88 %) | (0.20 Mol) |
| 100.00 g | NMP | |
| 00.50 g | DMAP | 30 Min. bei 120°C rühren, auf 60°C abkühlen, dazu eine Aufschlämmung von |
| 123.15 g | BAPP | (0.30 Mol) und |
| 100.00 g | NMP | 60 Min. bei 60°C weiterrühren, abkühlen. |

| Beispiel 6 (B6): | | |
|---|---|---|
| 93.08 g | ODPA | (0.30 Mol) |
| 62.10 g | MPG | (0.45 Mol) |
| 33.21 g | APTES | (0.15 Mol) |
| 100.00 g | MMP | |
| 00.50 g | DMAP | 30 Min. bei 120°C rühren, auf 60°C abkühlen, dazu eine Aufschlämmung von |
| 123.15 g | BAPP | (0.30 Mol) und |
| 100.00 g | NMP | 60 Min. bei 60°C weiterrühren, abkühlen. |

| Beispiel 7 (B7): | | |
|---|---|---|
| 93.08 g | ODPA | (0.30 Mol) |
| 62.10 g | MPG | (0.45 Mol) |
| 33.21 g | APTES | (0.15 Mol) |
| 100.00 g | NMP | |
| 00.50 g | DMAP | 30 Min. bei 120°C rühren, auf 60°C abkühlen, dazu eine Aufschlämmung von |
| 123.15 g | BAPP | (0.30 Mol) und |
| 90.00 g | NMP | 10 Min. bei 60°C weiterrühren, dazu |
| 10.00 g | Wasser | 50 Min. bei 60°C weiterrühren, abkühlen. |

| Beispiel 8 (B8): | | |
|---|---|---|
| 93.08 g | ODPA | (0.30 Mol) |
| 34.50 g | MPG | (0.25 Mol) |
| 33.21 g | APTES | (0.15 Mol) |
| 14.42 g | Aminoessigsäure | (0.20 Mol) |
| 100.00 g | NMP | |
| 00.50 g | DMAP | 30 Min. bei 120°C rühren, auf 60°C abkühlen, dazu eine Aufschlämmung von |
| 123.15 g | BAPP | (0.30 Mol) in |
| 100.00 g | NMP | 60 Min. bei 60°C weiterrühren, abkühlen. |

| Beispiel 9 (B9): | | |
|---|---|---|
| 93.08 g | ODPA | (0.30 Mol) |
| 34.50 g | MPG | (0.25 Mol) |
| 33.21 g | APTES | (0.15 Mol) |
| 14.42 g | Aminoessigsäure | (0.20 Mol) |
| 100.00 g | NMP | |
| 00.50 g | DMAP | 30 Min. bei 120°C rühren, auf 60°C abkühlen, dazu eine Aufschlämmung von |
| 123.15 g | BAPP | (0.30 Mol) in |
| 90.00 g | NMP | 10 Min. bei 60°C weiterrühren, dazu |
| 10.00 g | Wasser | 50 Min. bei 60°C weiterrühren, abkühlen. |

Prüfung von mit den Polyimidlösungen (PI-Lacke) beschichteten Substraten.

Bestimmung der Mindestvortrocknung und der Naßentwickelbarkeit.

Die PI-Lacke müssen soweit vorgetrocknet werden, daß sie durch die Fotolacke, bzw. die Lösemittel der Fotolacke nicht angelöst werden. Wichtige Lösemittel solcher Fotolacke sind 2-Acetoxy-1-methoxypropan und 2-Ethoxyethylacetat. Für diese Lösemittel wurde deshalb die Mindestvortrocknung (MVT) bestimmt, als die Trocknung nach der die Lacke unter einem mit dem Lösemittel angefeuchteten Wattebausch nach 5 Minuten keine Veränderung zeigten.

Zur Prüfung der Entwickelbarkeit wurden die Lacke dann mit einer Rakel von 100 µm Spalthöhe auf Blechstreifen aufgerakelt und in einem Umluftofen der Mindestvortrocknung unterzogen, es wurden danach ca. 30 µm Schichtdicke erhalten.

Entwickelt wurde in einem Becherglas mit Magnetrührer bei 25°C. Die Blechstreifen wurden dabei etwa zur Hälfte in den Entwickler getaucht.

Nach fünf Minuten wurden die Proben mit Wasser abgespült, mit Druckluft trockengeblasen und mit einem magnetischen Schichtdikkenmeßgerät die Differenz zwischen eingetauchtem und nicht eingetauchtem Teil als Abtrag bestimmt.

Als Entwickler wurden 0.25 und 0.4-normale wäßrige Lösungen von Tetramethylammoniumhydroxyd (TMAH) verwendet.

Die Ergebnisse sind in Tabelle I aufgelistet.

**Tabelle I**

| Lacke Bsp. Nr. | Mindestvortrocknung | | Abtragsrate bei MVT | |
|---|---|---|---|---|
| | Zeit [min] | Temperatur [°C] | 0,25 nTMEH [µm/min] | 0,40 nTMEH [µm/min] |
| VB | 35 | 130 | 0 | 0 |
| B1 | 40 | 130 | 1,2 | 2,8 |
| B2 | 40 | 135 | 1,9 | 3,6 |
| B3 | 45 | 135 | 2,8 | 5,3 |
| B4 | 30 | 135 | 0,8 | 2,1 |
| B5 | 30 | 135 | 1,3 | 3,2 |
| B6 | 35 | 140 | 0 | 0 |
| B7 | 35 | 140 | 0 | 0 |
| B8 | 30 | 130 | 3,1 | 4,4 |
| B9 | 30 | 130 | 2,9 | 4,7 |

### Haftungsprüfung

### Prüfsubstrate

- Prüfsubstrat Si :: fabrikfrische, polierte Scheiben aus Reinstsilizium (Wafer)
- Prüfsubstrat O :: fabrikfrische Wafer, im Sauerstoffplasma an ihrer Oberfläche zu SiO₂ oxydiert
- Prüfsubstrat Si/HV :: fabrikfrische Wafer, mit einer Haftvermittlerlösung aus 0.01 % 3-Aminopropyltriethoxysilan in Methanol/Wasser 95:5 benetzt und 10 Min. bei 150°C im Umluftofen getrocknet
- Prüfsubstrat O/HV :: oxydierte Wafer mit Haftvermittlernachbehandlung wie bei Si/HV

### Herstellung der Probekörper

Die PI-Lacke werden auf einer Lackschleuder auf die Prüfsubstrate aufgeschleudert. Dabei wird die Drehzahl so eingestellt, daß nach dem Trockenprozeß Schichtdicken von 15 bis 18 µm resultieren. Nach dem Aufschleudern der Lacke werden die Wafer im Vakuum auf beheizbaren Platten mit einer Heizrate von 10°C/Minute auf 360°C aufgeheizt. Nach Erreichen der Endtemperatur wird der Ofen ausgeschaltet. Nach ca. 4 Stunden haben die Platten Raumtemperatur erreicht und die Wafer werden zur Prüfung entnommen.

Die Probekörper werden zunächst 48 Std. bei Raumtemperatur gelagert und dann in einem Dampfsterilisator 24 Stunden bei 121°C und 1 bar im Dampfraum gelagert (pressure cooker Test). Sofort nach Entnahme werden die Prüflinge mit saugfähigem Papier abgetrocknet. Dann wird die Beschichtung mit einem scharfen Messer bis auf die Waferoberfläche im Abstand von 1 mm gitterförmig eingeritzt. Über diesen Gitterschnitt wird ein Tesa-Film geklebt und wieder abgezogen. Bei guter Haftung bleibt dabei die Beschichtung vollständig am Wafer haften, bei schlechter Haftung werden Teile des Gitters und bei sehr schlechter Haftung auch die komplette Beschichtung mit abgezogen.

Die Beurteilung erfolgt nach Noten, wobei Noten von 2 bis 4 Zwischenstufen zwischen 1 = perfekte Haftung und 5 = rückstandsfreie Enthaftung, bedeuten.

Die Ergebnisse der Haftungsprüfung sind in Tabelle II aufgelistet.

**Tabelle II**

| Beispiele Lack-Nr. | Haftung -Noten auf Sübstraten | | | |
|---|---|---|---|---|
| | Si | O | Si/HV | O/HV |
| VB | 5 | 5 | 1-2 | 1 |
| B1 | 5 | 5 | 1 | 1 |
| B2 | 5 | 5 | 1 | 1 |
| B3 | 5 | 5 | 1 | 1 |
| B4 | 5 | 5 | 1 | 1 |
| B5 | 5 | 5 | 1-2 | 1-2 |
| B6 | 2 | 1 | 1 | 1 |
| B7 | 1 | 1 | 1 | 1 |
| B8 | 2 | 1 | 1 | 1 |
| B9 | 1 | 1 | 1 | 1 |
| Mechanische Eigenschaften der Polyimid-Beschichtungen | | | | |

Die Lacke wurden mit einer Rakel mit 100 µm-Spalthöhe auf Glasplatten aufgerakelt und in einem Vakuumofen mit einer Heizrate von 5°C/Min. auf 350°C aufgeheizt, der Ofen wurde dann abgestellt. Nach dem Abkühlen wurden die Glasplatten in Wasser gelegt, das dann zum Kochen gebracht wurde; dabei lösen sich die Filme vom Glas.

Die freien Filme wurden bei 140°C im Umluftofen getrocknet. An den getrockneten Filmen wurden die IR-Spektren verglichen, sie waren bis auf geringfügige meßtechnische Abweichungen fas deckungsgleich. Die mechanischen Eigenschaften der Filme wurden mit einem Zug/Dehnungsversuch bestimmt. Die Angaben in der Tabelle sind das Ergebnis der statistischen Auswertung von je acht Einzelmeßungen.

Weiter wurden die freien Filme bei 98 % Luftfeuchtigkeit gelagert bis zur Gewichtskonstanz und so die Wasseraufnahme bestimmt. Die Angaben in der Tabelle III sind der Durchschnitt aus je drei Tests.

**Tabelle III**

| Lack | Reißkraft [N/mm²] | Reißdehnung [%] | E-Modul [N/mm²] | Wasseraufnahmen [Gew.-%] |
|---|---|---|---|---|
| VB | 89.4 | 31.3 | 2586 | 0.93 |
| B1 | 93.2 | 36.3 | 2678 | 0.89 |
| B2 | 90.7 | 29.1 | 2733 | 0.96 |
| B3 | 94.4 | 33.6 | 2774 | 0.91 |
| B4 | 88.9 | 28.5 | 2557 | 0.88 |
| B5 | 87.3 | 34.0 | 2689 | 0.92 |
| B6 | 92.4 | 27.7 | 2712 | 1.14 |
| B7 | 88.7 | 33.4 | 2522 | 0.97 |
| B8 | 91.6 | 29.4 | 2669 | 1.21 |
| B9 | 89.6 | 34.4 | 2512 | 0.93 |
| Die Beispiele zeigen, daß mit den erfindungsgemäßen Lacken Polyimide mit vergleichbar guten mechanischen Eigenschaften wie im VB erreicht werden. Auch die Wasseraufnahme ist vergleichbar wie beim VB; die Abweichungen liegen im Meßfehlerbereich. | | | | |

## Patentansprüche

1. Lösungen polyimidbildender Substanzen, enthaltend
A) Polyamine und
B) Amide oder Ester oder Gemische aus Amiden und Estern von Tetracarbonsäuren, worin 10 bis 100 mol-% der Amid- oder Estergruppen mit Carboxylgruppen oder Sulfonylgruppen und/oder 0,5 bis 30 mol-% der Amid- beziehungsweise Estergruppen mit Silyl- oder Siloxylgruppen, bezogen auf die Gesamtmenge an eingesetzten amin- bzw. hydroxylfunktionellen Verbindungen, substituiert sind.

2. Lösungen nach Anspruch 1, enthaltend als Komponente A) aromatische oder teilaromatische Diamine.

3. Lösungen nach einem der Ansprüche 1 oder 2, enthaltend als Komponenten B) Diamide, Diester oder Gemische daraus von Tertracarbonsäuren.

4. Lösungen nach einem der Ansprüche 1 bis 3, enthaltend Komponenten B), welche erhalten werden durch Umsetzung von Tetracarbonsäureanhydriden mit amin- oder hydroxyfunktionellen Verbindungen oder Gemischen davon, welche ausgewählt sind aus der Gruppe der Hydroxycarbonsäuren, Aminocarbonsäuren, Hydroxysulfonsäuren, Aminosulfonsäuren, hydroxysubstituierten Silane und Siloxane und der aminosubstituierten Silane und Siloxane.

5. Verwendung von Lösungen gemäß einem der Ansprüche 1 bis 4 zur Herstellung von Überzügen.

## Claims

1. A solution of a polyimide-forming substance, containing
A) polyamines and
B) amides or esters or mixtures of amides and esters of tetracarboxylic acids, in which from 10 to 100 mol% of the amido or ester groups are substituted by carboxyl groups or sulfonyl groups and/or from 0.5 to 30 mol% of the amido or ester groups are substituted by silyl or siloxyl groups, based on the total amount of compounds used which have amino or hydroxyl functional groups.

2. A solution as claimed in claim 1, containing, as components A), aromatic or partly aromatic diamines.

3. A solution as claimed in either of claims 1 and 2, containing, as components B), diamides, diesters or mixtures of diamides and diesters of tetracarboxylic acids.

4. A solution as claimed in any of claims 1 to 3, containing components B) which are obtained by reacting tetracarboxylic anhydrides with compounds having amino or hydroxyl functional groups or mixtures of said compounds, which are selected from the group consisting of the hydroxycarboxylic acids, aminocarboxylic acids, hydroxysulfonic acids, aminosulfonic acids, hydroxyl-substituted silanes and siloxanes and the amino-substituted silanes and siloxanes.

5. Use of a solution as claimed in any of claims 1 to 4 for the production of coatings.

## Revendications

1. Solutions de substances formant des polyimides, contenant
A) des polyamines et
B) des amides ou des esters ou des mélanges d'amides et d'esters d'acides tétracarboxyliques, où 10 à 100 % en moles des groupes amide ou ester sont substitués par des groupes carboxyle ou des groupes sulfonyle et/ou 0,5 à 30 % en moles des groupes respectivement amide ou ester sont substitués par des groupes silyle ou siloxyle, par rapport à la quantité totale de composés à fonctionnalité respectivement amine ou hydroxyle mis en oeuvre.

2. Solutions selon la revendication 1, contenant, comme composant A), des diamines aromatiques ou partiellement aromatiques.

3. Solutions selon l'une des revendications 1 et 2, contenant, comme composant B), des diamides, des diesters ou des mélanges de tels diamides ou diesters d'acides tétracarboxyliques.

4. Solutions selon l'une des revendications 1 à 3, contenant des composants B) qui sont obtenus par réaction d'anhydrides d'acide tétracarboxylique avec des composés à fonctionnalité amine ou hydroxyle ou des mélanges de ceux-ci, qui sont choisis dans le groupe des acides hydroxycarboxyliques, des acides aminocarboxyliques, des acides hydroxysulfoniques, des acides aminosulfoniques, des silanes et siloxanes à substitution hydroxy et des silanes et siloxanes à substitution amino.

5. Utilisation de solutions selon l'une des revendications 1 à 4 pour la préparation de revêtements.
